# EUROPEAN PATENT APPLICATION

(11) **EP 1 718 077 A2**
(43) Date of publication of application: **02.11.2006**
(21) Application number: 06001250.7
(22) Date of filing: 20.01.2006
(51) Int. Cl.: H04N 7/15, H04N 7/14

(54) **System and method for video teleconferencing via a video bridge**

(30) Priority: 29.04.2005 US 676242 P; 09.06.2005 US 149097
(71) Applicant: Broadcom Corporation, Irvine, CA 92618-7013 (US)
(72) Inventor: Relan, Sandeep, 560037 Bangalore (IN); Mishra, Brajabandhu, 93 Bangalore (IN); Khare, Rajendra, 75 Bangalore (IN)
(74) Representative: Jehle, Volker Armin

(57) **Abstract**

Presented herein are systems and methods for video teleconferencing. A mobile terminal comprises a transceiver, a video decoder, and a display screen. The transceiver receives video data signals from a plurality of mobile terminals. The video decoder generates videos from the video data signals from the plurality of mobile terminals. The display screen simultaneously displays the videos.

## Description

### RELATED APPLICATIONS

This application claims priority to "System and Method for video Teleconferencing Via A Video Bridge", Provisional Application for U.S. Patent, Serial 60/676,242, filed April 29, 2005, by Sandeep Relan, et al.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

Teleconferencing allows a number of parties to have a conversation over the telephone. The participating parties can call a predetermined phone number. Calling the predetermined phone number connects the party to what is known as a teleconference bridge.

A teleconference bridge can include any number of ports for each party. One port associated with a party receives audio signals from the parties phone. For each party, the teleconferencing bridge combines the audio signals from each of the other parties and provides the combined signal to another port associated with a party.

While such teleconferencing allows multiple users to simultaneously converse, the teleconferencing lacks the look and feel of an actual conference without video. Although there are a number of schemes allowing audio and video conversations, these schemes have a number of drawbacks.

In one scheme, a party can make a video phone call to another party. Each party receives the audio and video from the other party. Alternatively, the parties can communicate via audio and video over the internet. However, these schemes are used for two party communications, in contrast to multiple party teleconferences. Additionally, these schemes are usually implemented using a computer acting as telephone terminal and a video camera attached to the computer. This makes it difficult to for a party to be mobile during the phone conversation.

There are some cellular phones on the market that allow parties to send pictures to other parties. However, these cell phones send still digital photographs as opposed to video. Additionally, the digital photographs are sent during two party calls.

There are also schemes that provide video conferencing over a closed circuit. However, these video conferencing schemes involve placement of a significant amount of equipment at the location of each party.

Further limitations and disadvantages of convention and traditional approaches will become apparent to one of ordinary skill in the art through comparison of such systems with the present invention as set forth in the remainder of the present application with reference to the drawings.

### BRIEF SUMMARY OF THE INVENTION

Presented herein are systems and methods for video teleconferencing.

In one embodiment, there is presented a mobile terminal. The mobile terminal comprises a transceiver, a video decoder, and a display screen. The transceiver receives video data signals from a plurality of mobile terminals. The video decoder generates videos from the video data signals from the plurality of mobile terminals. The display screen simultaneously displays the videos.

In another embodiment, there is presented a method for communicating with a mobile terminal. The method comprises allocating an upstream voice channel to the mobile terminal; allocating a downstream voice channel to the mobile terminal; allocating an upstream data channel to the mobile terminal; allocating one or more downstream data channels to the mobile terminal; and transmitting video data signals from a plurality of other mobile terminals to the mobile terminal over the one or more downstream data channels.

In another embodiment, there is presented a video teleconferencing bridge for a video teleconference. The video teleconference bridge comprises a plurality of ports for receiving audio data signals, a combiner, a plurality of ports for receiving video data signals, and at least one port for providing each mobile terminal of the plurality of mobile terminals with a video data signal. The plurality of ports for receiving audio data signals, receive audio signals from a plurality of mobile terminals engaged in the video teleconference. The combiner generates a plurality of combined audio data signal corresponding to the plurality of mobile terminals, wherein each of the plurality of combined audio data signals combines audio data signals from the each plurality of mobile terminals except the mobile terminal corresponding thereto. The plurality of ports for receiving video data signals receive video data signals from the plurality of mobile terminals. The at least one port for providing each mobile terminal of the plurality of mobile terminals with a video data signal provide a video data signal from each of the other mobile terminals of the plurality of mobile terminals.
According to an aspect of the invention, a mobile terminal is provided comprising:
a transceiver for receiving video data signals from a plurality of mobile terminals;
a video decoder for generating videos from the video data signals from the plurality of mobile terminals; and
a display screen for simultaneously displaying the videos.
Advantageously, the transceiver receives the videos data signals from the plurality of mobile terminals from a radio channel, and wherein the video data signals from the plurality of mobile terminals comprise a combined video data signal.
Advantageously, the transceiver receives the videos from the plurality of mobile terminals from a corresponding plurality of radio channels.
Advantageously, the video decoder generates a combined video comprising frames, wherein each frame comprises a frame from each of the videos from the plurality of mobile terminals.
Advantageously, the video decoder decompresses each of the video data signals from the plurality of mobile terminals.
Advantageously, the mobile terminal further comprises a video camera for capturing a video.
Advantageously, the mobile terminal further comprises a video encoder for generating a video data signal representing the video.
According to an aspect of the invention, a method for communicating with a mobile terminal is provided, said method comprising:
allocating an upstream voice channel to the mobile terminal;
allocating a downstream voice channel to the mobile terminal;
allocating an upstream data channel to the mobile terminal;
allocating one or more downstream data channels to the mobile terminal; and
transmitting video data signals from a plurality of other mobile terminals to the mobile terminal over the one or more downstream data channels.
Advantageously, transmitting video data signals from the plurality of other mobile terminals further comprises:
transmitting a combined video data signal from the plurality of other mobile terminals to the mobile terminal over a particular one of the one or more downstream data channels.
Advantageously, transmitting video data signals from the plurality of other mobile terminals further comprises:
transmitting each of the video data signals from the plurality of other mobile terminals over different ones of the one or more downstream data channels.
Advantageously, the method further comprises:
receiving a video data signal from the mobile terminal from the upstream data channel.
Advantageously, the method further comprises:
transmitting a combined audio data signal to the mobile terminal over the downstream voice channel.
According to an aspect of the invention, a video teleconferencing bridge for a video teleconference is provided, said video teleconference bridge comprising:
a plurality of ports for receiving audio data signals from a respective plurality of mobile terminals engaged in the video teleconference;
a combiner for generating a plurality of combined audio data signal corresponding to the plurality of mobile terminals, wherein each of the plurality of combined audio data signals combines audio data signals from the each plurality of mobile terminals except at least one of the plurality of mobile terminals;
a plurality of ports for receiving video data signals from the respective plurality of mobile terminals; and
at least one port for providing each mobile terminal of the plurality of mobile terminals with a video data signal from each of the other mobile terminals of the plurality of mobile terminals.
Advantageously, the video teleconference bridge further comprises:
a video concatenator for generating a combined video data signal.
Advantageously, the video concatenator generates a plurality of combined video data signals corresponding to the plurality of mobile terminals, wherein each of the combined video data signals corresponding to a particular one of the plurality of mobile terminals comprises video data signals from each of the other mobile terminals from the plurality of mobile terminals.
Advantageously, the a plurality of ports for receiving audio data signals receive the audio data signals from a public switched telephone network.
Advantageously, the plurality of ports for receiving video data signals receive the video data signals from a packet network.
Advantageously, video teleconference bridge is associated with a phone number and a packet network address.

These and other advantages and novel features of the present invention, as well as details of an illustrated embodiment thereof, will be more fully understood from the following description and drawings.

### BRIEF DESCRIPTION OF SEVERAL VIEWS OF THE DRAWINGS

**FIGURE 1** is a block diagram describing a communication system in accordance with an embodiment of the present invention;

**FIGURE 2** is an exemplary mobile terminal in accordance with an embodiment of the present invention;

**FIGURE 3** is a block diagram of an exemplary network comprising a Global System for Mobile Communication Public Land Mobile Network configured in accordance with an embodiment of the present invention; and

**FIGURE 4** is video teleconferencing bridge in accordance with an embodiment of the present invention.

### DETAILED DESCRIPTION OF THE INVENTION

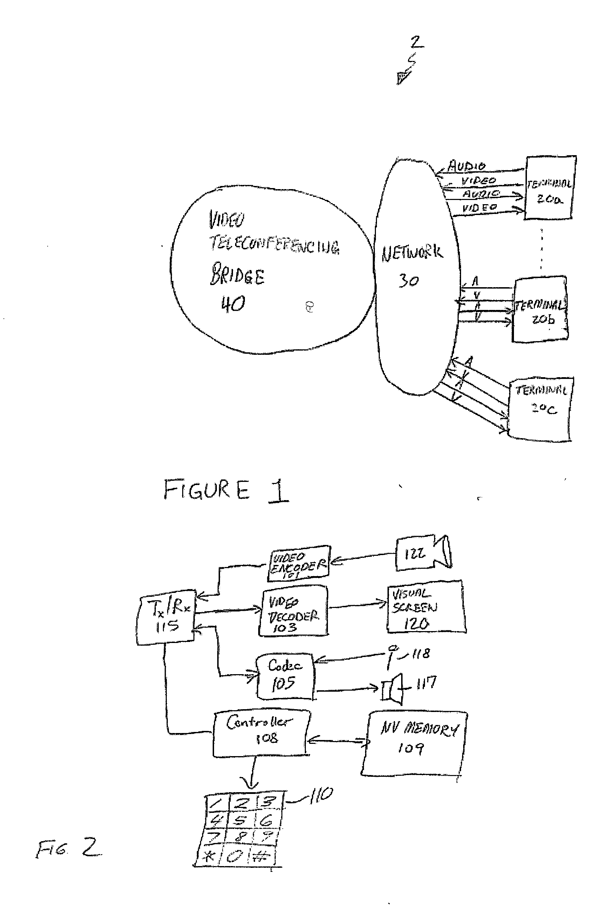

Referring now to **FIGURE 1**, there is illustrated a block diagram describing an exemplary communication system 2 in accordance with an embodiment of the present invention. The communication system 2 comprises a plurality of terminals 20, network(s) 30, and a video teleconferencing bridge 40.

The communication system 2 allows parties at the plurality of terminals 20 to participate in a video teleconference. The video teleconference provides both video and audio to a party from each other party. The terminals 20 capture video and audio from the party, and present video and audio from each of the other parties.

The terminals 20 capture the video and audio and provide the video and audio to a video teleconferencing bridge 40 via network 30. The video teleconferencing bridge 40 is node in the network 30 that receives the captured video and audio from each terminal 20. The video teleconferencing bridge 40 provides the video and audio to a terminal 20 that is captured by each of the other terminals 20. For example, the video teleconferencing bridge 40 provides the video and audio captured by terminals 20a and 20b to terminal 20c.

The video teleconferencing bridge 40 provides the video and audio for each terminal 20 via network 30. The network 30 can comprise a variety of networks such as, but not limited to, the internet, a public switched telephone network, a cellular phone network, or any combination thereof.

The terminals 20 are equipped to capture and present video and audio. The terminals 20 can capture video and audio by means of a video camera, and a microphone, respectively. The terminals 20 can present the video and audio with a visual screen and a speaker. The terminals 20 can comprise, for example, but are not limited to, a computer, a laptop, a telephone, or a mobile terminal, such as a cellular phone, or a personal digital assistant.

The video teleconferencing bridge can be allocated to a particular group of parties. The group of parties can receive a phone number and/or address associated with the video teleconferencing bridge 40. Each of parties can access the teleconferencing bridge 40 via a terminal 20 by either calling the phone number and/or requesting access to the address associated with the teleconferencing bridge 40.

Several video teleconferencing bridges 40 can be associated with a phone number and/or address. Accordingly, each party can also receive an identifier identifying a particular video teleconferencing bridge 40. Each party can also receive a PIN as an additional security measure to prevent eavesdropping.

Referring now to **FIGURE 2,** there is illustrated a block diagram of an exemplary mobile terminal 20 in accordance with an embodiment of the present invention. For purposes of clarity, the block diagram is not intended as an exhaustive illustration, and certain components may be omitted.

The mobile terminal 20 comprises a video encoder 101, a video decoder 103, a codec 105, a controller 108, non-volatile memory 109, a keypad 110, a transceiver 115, a speaker 117, a microphone 118, a visual screen 120, and a video camera 122.

The mobile terminal 20 operates in one of two modes - the inactive mode and the active mode. The inactive mode is characterized as the period when the mobile terminal 20 is not engaged in a telephone call. During the inactive mode, the controller causes the transceiver 115 to scan a paging channel for an incoming call. In the active mode, the mobile terminal 20 engages in a phone call.

In the active mode, a party can participate in a video teleconference. During a video teleconference, the video camera 122 and microphone 118 capture video and audio from the party. The video camera 122 provides the captured video to the video encoder 101. The video encoder 101 encodes the video into a video data signal. The microphone 118 provides the captured audio to the codec 105. The codec 105 encodes the audio into an audio data signal.

The video encoder 101 can, but does not have to, utilize data compression to provide the video data signal. For example, in one embodiment, the video encoder 101 can digitize the video from the video camera 122, and compress the digitized video in accordance with the MPEG-2 standard.

The video encoder 101 and codec 105 provide the video data signal and audio data signal to the transceiver 115. The transceiver 115 transmits the video data signal and audio data signal as radio signals. During a video teleconferencing call, a supporting cellular phone network allocates radio channels to the mobile terminal. The transceiver 115 transmits the video data signal and audio data signal on the allocated radio channels.

During a video teleconference, the video decoder 103 and the codec 105 present video and audio. The transceiver 115 receives radio signals transmitting the video data signals and audio data signals. The transceiver 115 provides the video data signals to the video decoder 103 and the audio data signals to the codec 105.

As will be described in greater detail below, during a video teleconference, the mobile terminal 20 can receive a plurality of video data signals and audio data signals from other parties. The video teleconferencing bridge 40 receives and combines the audio data signals from each of the other parties and provides the combined audio data signals to the mobile terminal 20 via network 30. The video teleconferencing bridge 40 also receives each of the video data signals from the other parties and provides each of the video data signals from the other parties to the mobile terminal 20 via network 30.

The transceiver 115 receives the combined audio data signals and provides the combined audio data signals to the codec 105. The codec 105 provides the audio signals to the speaker 117.

In one embodiment, the transceiver 115 can receive each of the video data signals from each of the other parties to the video teleconference and provides each of the video data signals to the video decoder 103. The video decoder 103 decodes each of the video data signals from the other parties and provides a combined video of each of the other parties to the video teleconference to the visual screen 120. The combined video can comprise frames, wherein each frame comprises a sub-frame from each party. Each sub-frame can occupy a portion of the frame. The sub-frames together can panel the frame. When the visual screen 120 displays the frame, the sub-frames occupy different portions of the visual screen 120. The video decoder 103 can comprise, for example, a video decoder described in "System, Method, and Apparatus for Simultaneously Displaying Multiple Video Streams", U.S. Application for Patent, Serial No. 10/600,162, filed June 20, 2003, by Bhatia, et. al, which is incorporated herein by reference for all purposes in its entirety.

In another embodiment, the transceiver 215 can receive a combined video data signal corresponding to a combined video comprising frames, wherein each frame comprises a sub-frame from each party.

In other embodiments, the mobile terminal 20 may be equipped to mute audio and video transmission independently, and selectively. The mobile terminal 20 may be equipped to mute specific videos from other participants and mute incoming audio. Additionally, the mobile terminal 20 may also include a video format conversion facility. If any video from a participant is not the as the display format of the mobile terminal 20, the mobile terminal 20 converts the video format to the display format. Additionally, the mobile terminal 20 can make audio and video in hold mode.

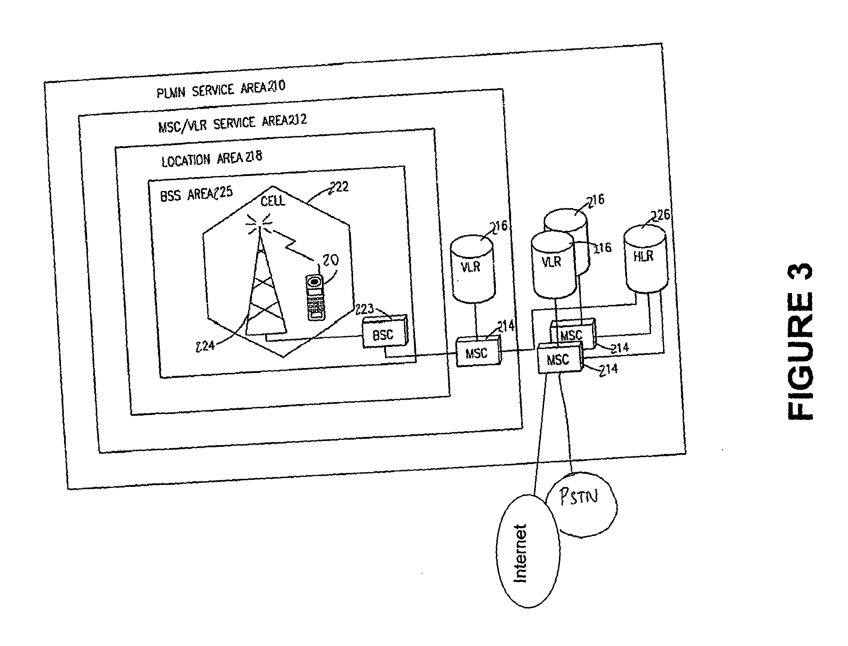

Referring now to **FIGURE 3** there is illustrated a block diagram of a Global System for Mobile Communication (GSM) Public Land Mobile Network (PLMN) 210. The PMLN 210 is composed of a plurality of areas 212, each with a node known as a Mobile Switching Center (MSC) 214 and an integrated Visitor Location Register (VLR) 216 therein. The MSC/VLR areas 212, in turn, include a plurality of Location Areas (LA) 218, which are defined as that part of a given MSC/VLR area 212 in which a mobile terminal 120 may move freely without having to send update location information to the MSC/VLR area 212 that controls the LA 218. Each Location Area 212 is divided into a number of cells 222. The mobile terminal 220 is the physical equipment, e.g., a car phone or other portable phone, used by mobile subscribers to communicate with the cellular network 210, each other, and users outside the subscribed network, both wireline and wireless.

The MSC 214 is in communication with at least one Base Station Controller (BSC) 223, which, in turn, is in contact with at least one Base Transceiver Station (BTS) 224. The BTS is a node comprising the physical equipment, illustrated for simplicity as a radio tower, that provides radio coverage to the geographical part of the cell 222 for which it is responsible. It should be understood that the BSC 223 may be connected to several base transceiver stations 224, and may be implemented as a stand-alone node or integrated with the MSC 214. In either event, the BSC 223 and BTS 224 components, as a whole, are generally referred to as a Base Station System (BSS) 225. At least one of the MSCs 214 are connected to the public switched telephone network (PSTN).

The PLMN Service Area or wireless network 210 includes a Home Location Register (HLR) 226, which is a database maintaining all subscriber information, e.g., user profiles, current location information, International Mobile Subscriber Identity (IMSI) numbers, and other administrative information. The HLR 226 may be co-located with a given MSC 214, integrated with the MSC 214, or alternatively can service multiple MSCs 214, the latter of which is illustrated in **FIGURE 2**.

The VLR 216 is a database containing information about all of the mobile terminals 120 currently located within the MSC/VLR area 212. If a mobile terminal 120 roams into a new MSC/VLR area 212, the VLR 216 connected to that MSC 214 will request data about that mobile terminal 120 from the HLR database 226 (simultaneously informing the HLR 226 about the current location of the mobile terminal 120). Accordingly, if the user of the mobile terminal 120 then wants to make a call, the local VLR 216 will have the requisite identification information without having to re-interrogate the HLR 226. In the afore-described manner, the VLR and HLR databases 216 and 226, respectively, contain various subscriber information associated with a given mobile terminal 120.

At least one of the MSCs 214 connects the GSM PLMN 210 to a ground network, such as the internet or the public switched telephone network (PSTN). An MSC 214 connecting the GSM PLMN 210 to the PSTN is known as a Gateway MSC (GMSC). An MSC 214 connecting the GSM PLMN 210 to the internet is known as a GGSN. An MSC 214 can also connect the GSM PLMN 210 to both the internet and the PSTN.

During a video teleconference call, the BSS 225 in proximity to the mobile terminal 20 allocates an upstream voice channel, a downstream voice channel, an upstream data channel, and any number of downstream data channels. The mobile terminal 20 transmits the party's audio data signal on the upstream data channel, and the party's video data signal on the upstream data channel. The BSS 225 transmits the combined audio data signal to the mobile terminal 20 on the downstream voice channel. In one embodiment, the BSS 225 transmits video data signals from each other party on separate downstream data channels. In another embodiment, the BSS 225 transmits a combined video data signal to the mobile terminal 120 on a single downstream data channel.

The BSS 225 transmits and receives the audio data signals to and from an MSC 214. The MSC 214 transmits and receives the audio data signals to and from, either directly, or via another MSC 214, the PSTN. In one embodiment, the MSC 214 transmits and receives the video data signals to and from, either directly, or via another MSC 214, the PSTN. In another embodiment, the MSC 214 transmits and receives the video data signals to and from, either directly, or via another MSC 214, the internet. Where the video data signal are transmitted and received over the internet, the GSM PLMN provides both a phone call and a data session to the mobile terminal 20.

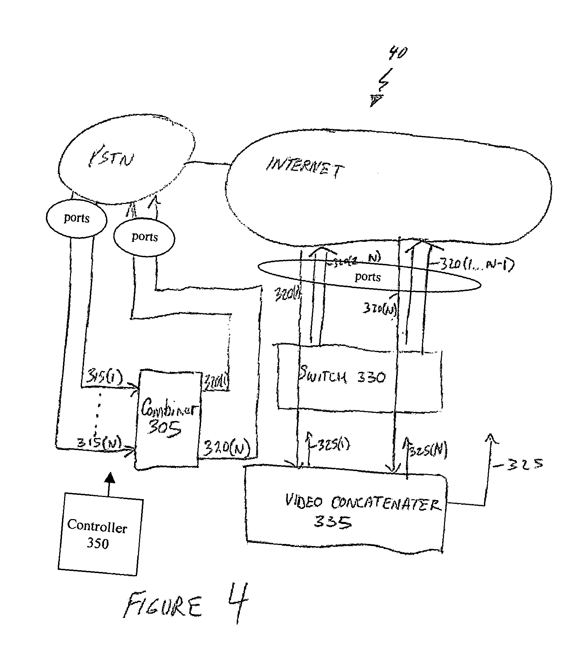

Referring now to **FIGURE 4,** there is illustrated a block diagram describing an exemplary video teleconferencing bridge 40 in accordance with an embodiment of the present invention. The video teleconferencing bridge 40 can be a node in the internet or the PSTN, or both. Where the video teleconferencing bridge 40 is a node in the internet, the video teleconferencing bridge 40 is associated with an IP address. Where the video teleconferencing bridge 40 is a node in the PSTN, the video teleconference bridge 40 is associated with a phone number. As noted above, several teleconference bridges 40 can be at the same node.

The teleconferencing bridge 40 includes ports that receive audio data signals and video data signals from each of the mobile terminals 20 participating in the video teleconference. The video teleconference 40 includes a combiner 305. The combiner 305 can receive audio data signals 310(1)...310(N) from N participants in the video teleconference bridge. The combiner 305 provides N combined audio data signals 315(1)...315(N). Each combined audio data signal 315(n) is the combination of each of the other N-1 audio data signals, besides audio data signal 310(n). Video teleconferencing bridge 40 ports provide each party with the combined audio data signal 315 combining the audio data signals from each of the other parties.

The video teleconferencing bridge 40 also receives each of the video data signals 320(1)...320(N). In one embodiment, the video teleconferencing bridge 40 provides each party with the video data signals 320 from each of the other parties. Alternatively, the video teleconferencing bridge 40 can provide each party with the video data signals 320 from all of the parties. A switch 330 achieves the foregoing.

In another embodiment, the video teleconferencing bridge 40 can combine each of the video data signals, thereby producing combined video data signals 325 (1)...325 (N), wherein each combined video data signal 325(n) is the combination of video data signals 320(1)...320(N), except 320(n). The video teleconferencing bridge 40 can the provide each party with the combined video data signal 325 combining the video data signals from each of the other parties. Alternatively, the video teleconferencing bridge 40 can provide a combined video data signal 325 combining all of the video data signals, and provide the combined video data signal 325 to all of the parties. A video concatenater 335 achieves the foregoing.

The teleconferencing bridge 40 also includes a controller 350 that performs various control functions. For example, the controller can convert incoming videos from the participants to the display format desired by other participants. Additionally, the controller 350 can provide accounting based upon the format, resolution, and quality, the amount of bandwidth consumed by different users. Additionally, the controller 350 can also provide facilities for recording and storing an entire conference. The controller 350 can also provide facilities for blocking objectionable content from being transmitted.

Certain embodiments described herein may be implemented as a board level product, as a single chip, application specific integrated circuit (ASIC), or with varying levels of the decoder system integrated with other portions of the system as separate components. The degree of integration of the decoder system will primarily be determined by the speed and cost considerations. Because of the sophisticated nature of modern processor, it is possible to utilize a commercially available processor, which may be implemented external to an ASIC implementation. Alternatively, if the processor is available as an ASIC core or logic block, then the commercially available processor can be implemented as part of an ASIC device wherein certain functions can be implemented in firmware.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A mobile terminal comprising:
a transceiver for receiving video data signals from a plurality of mobile terminals;
a video decoder for generating videos from the video data signals from the plurality of mobile terminals; and
a display screen for simultaneously displaying the videos.

2. The mobile terminal of claim 1, wherein the transceiver receives the videos data signals from the plurality of mobile terminals from a radio channel, and wherein the video data signals from the plurality of mobile terminals comprise a combined video data signal.

3. The mobile terminal of claim 1, wherein the transceiver receives the videos from the plurality of mobile terminals from a corresponding plurality of radio channels.

4. The mobile terminal of claim 3, wherein the video decoder generates a combined video comprising frames, wherein each frame comprises a frame from each of the videos from the plurality of mobile terminals.

5. A method for communicating with a mobile terminal, said method comprising:
allocating an upstream voice channel to the mobile terminal;
allocating a downstream voice channel to the mobile terminal;
allocating an upstream data channel to the mobile terminal;
allocating one or more downstream data channels to the mobile terminal; and
transmitting video data signals from a plurality of other mobile terminals to the mobile terminal over the one or more downstream data channels.

6. The method of claim 5, wherein transmitting video data signals from the plurality of other mobile terminals further comprises:
transmitting a combined video data signal from the plurality of other mobile terminals to the mobile terminal over a particular one of the one or more downstream data channels.

7. The method of claim 5, where transmitting video data signals from the plurality of other mobile terminals further comprises:
transmitting each of the video data signals from the plurality of other mobile terminals over different ones of the one or more downstream data channels.

8. A video teleconferencing bridge for a video teleconference, said video teleconference bridge comprising:
a plurality of ports for receiving audio data signals from a respective plurality of mobile terminals engaged in the video teleconference;
a combiner for generating a plurality of combined audio data signal corresponding to the plurality of mobile terminals, wherein each of the plurality of combined audio data signals combines audio data signals from the each plurality of mobile terminals except at least one of the plurality of mobile terminals;
a plurality of ports for receiving video data signals from the respective plurality of mobile terminals; and
at least one port for providing each mobile terminal of the plurality of mobile terminals with a video data signal from each of the other mobile terminals of the plurality of mobile terminals.

9. The video teleconference bridge of claim 8, further comprising:
a video concatenator for generating a combined video data signal.

10. The video teleconference bridge of claim 9, wherein the video concatenator generates a plurality of combined video data signals corresponding to the plurality of mobile terminals, wherein each of the combined video data signals corresponding to a particular one of the plurality of mobile terminals comprises video data signals from each of the other mobile terminals from the plurality of mobile terminals.
